Europäisches Patentamt

European Patent Office

Office européen des brevets

(11) Publication number: **0 481 584 A1**

# EUROPEAN PATENT APPLICATION

(21) Application number: **91304580.3**

(22) Date of filing: **21.05.91**

(51) Int. Cl.5: **F16N 7/26**, F16H 57/04

(30) Priority: **19.10.90 US 600470**

(43) Date of publication of application:
**22.04.92 Bulletin 92/17**

(84) Designated Contracting States:
**DE FR IT**

(71) Applicant: **BORG-WARNER AUTOMOTIVE, INC.
6700 18 1/2 Mile Road P.O.Box 8022
Sterling Heights, Michigan 48311-8022(US)**

(72) Inventor: **Churchill, Bruce A.
127 Cedar Lane
Groton, New York 13073(US)**
Inventor: **Butterfield, Roger P.
Rd 2 Box 98, 8370 Cayuga Boulevard
Interlaken, New York 14847(US)**

(74) Representative: **Allden, Thomas Stanley et al
A.A. THORNTON & CO. Northumberland
House 303-306 High Holborn
London WC1V 7LE(GB)**

(54) **Slinger lubrication process.**

(57) A lubrication system for an operating device (10) within a housing (11) to provide a non-pressurized lubrication system wherein said device includes a rotary input shaft (21), a rotary output shaft (37), means (23) between said shafts acting to operatively connect them for rotation, a fluid slinger device (54) secured onto one of said rotary shafts to rotate therewith, said device having offset radial arms (57) with slinger portions (58) at the ends thereof adapted to project into the fluid level in a static reservoir (53) formed in said housing, a settling reservoir (63) formed in the upper portion of said housing having an elongated opening (64) adjacent the highest point of said housing to receive fluid picked up by said slinger portions (58) and an orifice (66) at the lowest point of said settling reservoir (63) to allow fluid flow back to said static reservoir (53), bearings (33,34) for said rotating shaft (21) and a fluid retaining cup (69) adjacent said bearings acting to receive fluid from the fluid slinger device (54), and a housing wall (67) in general radial alignment with said fluid retaining cup (69) and having ribs (68) thereon to direct the fluid thrown by said slinger to said retaining cup.

FIG.1

## TECHNICAL FIELD

The invention disclosed herein relates to a lubrication process utilized in a two-speed alternator drive or similar device and to the lubrication apparatus inserted in the housing for the alternator drive to move the fluid lubricant to the walls of the housing from a static reservoir for lubrication of the system including bearings for a rotating shaft.

## BACKGROUND

It is desirable to provide lubrication to the bearings of a rotary shaft in a machine to reduce friction when the shaft and bearings rotate during use. As the speed of the shaft and bearings increases, the rate at which lubrication is needed also increases and, typically, oil pumps are used to assure that an adequate supply of lubricant is supplied to the bearings. However, any pump system adds considerable expense to the machine assembly. Further, pumps driven by the machine may have to build up pressure to force lubricant into the bearings resulting in only marginal amounts of the lubricant reaching the bearings during the first few critical revolutions of the shaft upon start-up. Similar problems will occur for splash lubrication systems as these types of systems do not retain a supply of lubricant immediately releasable at the required point of lubrication during start-up. The present invention overcomes these problems by providing a non-pressurized fluid lubrication system for machine components.

## DISCLOSURE OF THE INVENTION

The present invention relates to a novel fluid lubrication system which may be utilized in any enclosed apparatus containing rotary elements that require fluid lubrication, and the lubrication process and apparatus can be utilized where it is not feasible or perhaps not possible to use a pressurized lubrication system. This lubrication process and apparatus may be used whenever the following two conditions exist: 1) a fluid reservoir is contained within the device housing, and 2) a rotating member is near to the fluid reservoir. The lubrication process and apparatus utilizes a fluid slinger within the housing rotating with a rotating shaft therein; the fluid slinger acting to move fluid radially from a static fluid reservoir to the inner housing walls for the device and to a settling reservoir. The fluid adheres to the housing walls and flows to designated retaining areas for application to the desired rotary elements. The fluid slinger is mounted on a rotating member to rotate therewith, and at least a portion of the slinger must be immersed in the fluid in the static reservoir so that it will throw the fluid radially outwardly to the inner housing walls axially as well as radially. Furthermore, the inner surfaces of one or more of the housing walls are specifically designed to optimize fluid flow into one or more fluid retaining cups, and the trapped fluid in the cups then flows into the areas requiring lubrication.

## BRIEF DESCRIPTION OF THE DRAWINGS

FIGURE 1 is a cross sectional view through a suitable device, such as a two-speed alternator device, showing the positioning of a fluid slinger embodying the present invention therein.

FIGURE 2 is a vertical cross sectional view taken on line 2-2 of FIGURE 1 to more fully show the design of the fluid slinger.

FIGURE 3 is a vertical cross sectional view taken on line 3-3 of FIGURE 1 to show the configuration of a housing wall to promote oil flow to a fluid retaining cup.

## MODE FOR CARRYING OUT THE INVENTION

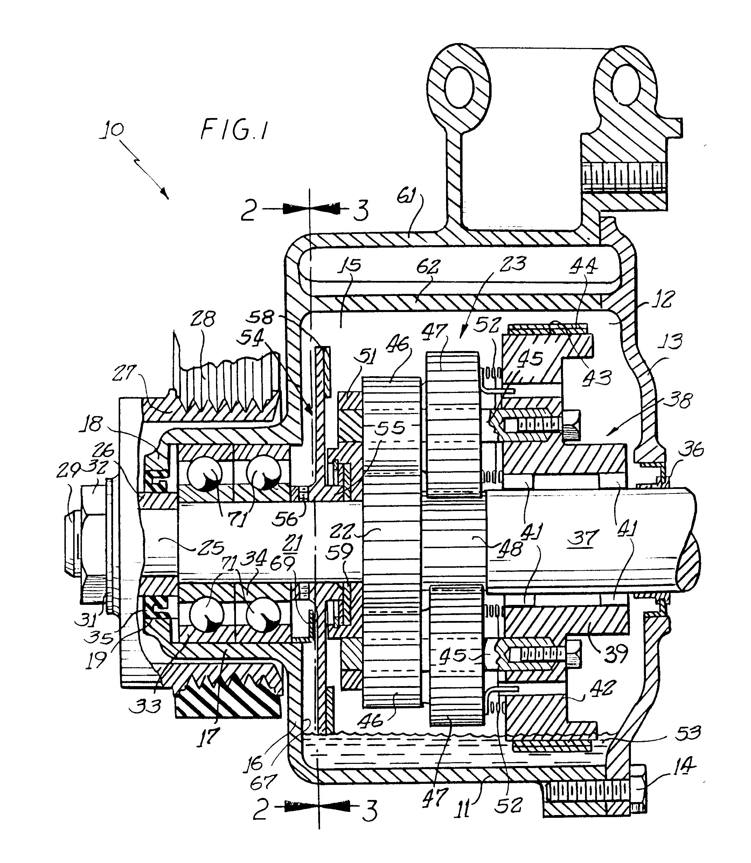

Referring more particularly to the disclosure in the drawings wherein is shown an illustrative embodiment of the present invention, FIGURE 1 discloses an enclosed apparatus 10 having a fluid lubricating system and containing rotary shafts for an accessory drive, which apparatus includes a housing 11 closed at the open end 12 by a cap or end plate 13 secured thereto by bolts 14 to provide a sealed hollow interior or chamber 15 therein. The housing 11 has a reduced diameter extension 17 projecting from the closed end 16 thereof with an end flange 18 defining a central opening 19 receiving a rotary input shaft 21 extending into the housing and terminating in a driving gear 22 for a suitable accessory, such as a two-speed alternator drive 23. The outer or free end of the shaft is stepped down at 25 to receive an inner flange or collar 26 of a drive pulley 27 which is driven by a suitable drive belt 28. The end of the shaft beyond the stepped down portion 25 is threaded at 29 to receive one or more washers 31 and a nut 32 securing the drive pulley 27 onto the end of the shaft.

Within the extension 16 are located a pair of bearings 33, 34 positioned between the shaft and the extension. A sealing ring 35 is also located between the end flange 18 of the extension and the pulley collar 26 to prevent the leakage of fluid from the housing and also to prevent the entrance of dust into the housing. A similar sealing ring 36 is located between the inner periphery of the end plate 13 and a second or output shaft 37 extending from the accessory drive 23 to project into a suitable accessory (not shown). Within the housing 11, the two-speed accessory drive 23 includes the driving gear 22 on the shaft 21, a planet gear carrier 38 having a hub 39 journalled on the output shaft 37 by needle bearings 41 and a radial flange 42 terminating in an generally cylindrical outer surface 43 acting as a friction surface for a brake band 44. A plurality of carrier shafts 45 are mounted on the radial flange 42 to extend through and carry pairs of planetary gears 46, 47 secured together and journalled on the shafts 45 through suitable bearings (not shown).

The first or smaller set of gears 46 mesh with the driving gear 22 on the input shaft 21, while the second set of gears 47 mesh with a driven gear 48 secured onto the output shaft 37 so as to drive the shaft at one of two speeds depending on the engagement or disengagement of the brake band 44. An end plate 51 is mounted on the ends of the shafts 45 opposite to the carrier and journalled on the shaft 21. A plurality of compression springs 52 are positioned between the radial flange 42 and the pairs of gears 46, 47 to urge the gears in the righthand direction as seen in FIGURE 1 toward the end plate 51 to overcome axial movement of the gears due to torque.

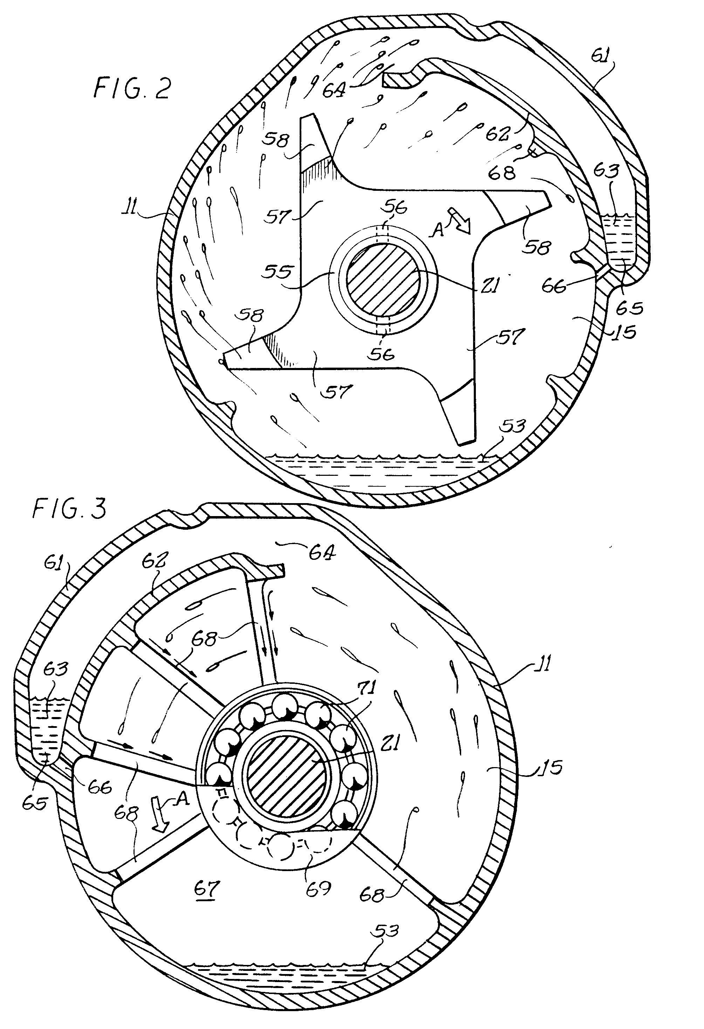

The chamber 15 provides a static reservoir 53 at the lower portion thereof to receive oil or other lubricant to be disbursed to the bearings 33, 34 by a fluid slinger. The fluid slinger 54 comprises a plate having a hub 55 secured onto the shaft 21, such as by set screws 56, and a plurality of generally offset radial arms 57 (FIGURE 2) extending outwardly from the hub to terminate in thicker slinger portions 58 which are adapted to be at least partially immersed in the lubricant in the static fluid reservoir 53. The hub 55 of the slinger frictionally engages a thrust washer 59 located within a recess in the end plate 51.

The housing 11 also includes an inner wall 62 spaced from the upper housing wall 61 and with the housing wall acts to define a settling reservoir 63 substantially opposite to the static fluid reservoir 53; the wall 62 paralleling the contour of the outer housing wall 61 for approximately 90 degrees as seen in FIGURES 2 and 3. An elongated opening 64 at the upper end of the reservoir 63 allows fluid that is thrown upward and outward by the slinger portions 58 to enter the reservoir; the fluid settling towards the lower end 65 of the reservoir where an orifice 66 allows the fluid to slowly return to the static reservoir.

The front wall 67 of the closed end 16 of the housing 11 is provided with generally radially arranged ribs 68 acting to strengthen the wall 67 and to optimize the fluid flow from the outer walls of the housing to the fluid retaining areas now to be described. A fluid retaining cup 69 (FIGURES 1 and 3) adjacent the bearings 33 and 34 collects fluid flowing from the ribs 68 and the walls of the housing. The retaining cup is used to hold the lubricating fluid at a predetermined level for adequate bearing lubrication. Thus, the oil retaining cup 69 at the input bearings 33 and 34 maintains an oil level above the bearing rollers 71, and the rollers will pick up the oil at the lubricating cup and lubricate themselves.

Operation of the two-speed accessory drive is clearly described in U. S. Patent No. 4862,770, with specific reference to the arrangement shown in FIGURE 3. During rotation of the input shaft 21, the fluid slinger 54 is constantly rotating with the slinger portions 58 dipping into the lubricant in the static reservoir 53 to pick up the fluid and throw it radially outwardly within the housing 11 to the inner wall surfaces thereof; the fluid moving both radially and axially. The settling reservoir 63 will reduce foaming of the fluid in most cases and is filled by the radial fluid flow from the slinger. The orifice 66 controls the lubricant flow from the settling reservoir to return to the static reservoir by modifying the size of the orifice so that the drain back rate out of the reservoir 63 is equal to or slightly less than the flow into the settling reservoir resulting in some fluid being retained in the settling reservoir during operation. This will reduce the fluid level in the static fluid reservoir 53, thus reducing fluid drag on the internal parts and improve the operating efficiency of the device.

INDUSTRIAL APPLICABILITY

This oil slinger device can be utilized in apparatus containing rotary members requiring lubrication where it is not feasible or perhaps not possible to use a pressurized lubrication system and can be utilized in a device whenever two conditions exist: 1) a fluid reservoir is contained within the housing of the device, and 2) a rotating member is near the fluid reservoir.

**Claims**

1. A method of lubricating the components of a rotary device (10) within a housing (11) having a static fluid reservoir (53), including the steps of preserving a fluid level in the static reservoir, picking up a portion of the fluid from said reservoir and throwing it radially within the housing (11) against the inner wall surfaces (67) thereof, retaining a portion of the fluid in a settling reservoir (63) formed in said housing, and returning the fluid to the static reservoir through parts (33,34) that require lubrication.

2. A method of lubrication as set forth in Claim 1, including the steps of providing at least one lubricant retaining member (69) adjacent parts (33,34) requiring lubrication, and returning the fluid thrown onto the housing walls (67) into said retaining member for lubrication of said parts.

3. A method of lubrication as set forth in Claim 1, including the step of retaining sufficient lubricant in said settling reservoir (63) to control the fluid level in said static reservoir (53) to reduce fluid drag on the internal parts of said device.

4. A method of lubrication as set forth in Claim 1, including the step of reducing the amount of foaming of the fluid in said settling reservoir (63) as it is thrown into the housing (11) from the static reservoir (53).

5. A method of lubrication as set forth in Claim 1, including the step of retaining increasing amounts of fluid in said settling reservoir (63) with increasing operating speeds of said device (10) to improve operating efficiency of said device.

6. A method of lubrication as set forth in Claim 1, wherein the amount of fluid returned to the housing (11) and static reservoir (53) from said settling reservoir (63) remains constant during operation of said device.

7. A non-pressurized lubrication system for a device (10) requiring lubrication during operation, comprising a housing (11), a rotating input shaft (21) and a rotating output shaft (37) in said housing, and means (23) to operatively connect said shafts, parts (33,34) in said housing requiring lubrication during operation, the improvement comprising a static reservoir (53) formed in the lower portion of said housing (11), a settling reservoir (63) formed in the upper portion of said housing and having an orifice (66) therein to permit the exit of a limited amount of lubricant therefrom, and a fluid slinger device (54) secured onto a rotating member (21) to rotate therewith, said device having means (58) projecting below the fluid level in said static reservoir (53), and means (68) directing the fluid flow from the walls of said housing to said static reservoir.

8. A non-pressurized lubrication system as set forth in Claim 7, wherein a retaining cup (69) is provided adjacent said parts (33,34) requiring lubrication to receive lubricant returning to the static reservoir (53).

9. A non-pressurized lubrication system as set forth in Claim 8, wherein said housing (11) includes a wall (67) in general radial alignment with said retaining cup (69), and fluid directing ribs (68) on said housing wall (67) to optimize fluid flow along said housing wall to and into said fluid retaining cup.

10. A non-pressurized lubrication system as set forth in Claim 7, wherein said settling reservoir (63) is formed from a generally arcuate wall (62) paralleling said housing wall (61) with an elongated opening (64) at the upper end of said settling reservoir and a small orifice (66) formed at the opposite lower end of said settling reservoir for return of the fluid to said static reservoir (53).

11. A non-pressurized lubrication system as set forth in Claim 7, wherein said device (10) includes bearings (33,34) for said input shaft (21), and an oil retaining cup (69) is positioned adjacent said bearings and in radial alignment with said housing wall (67) containing said flow directing ribs (68).

12. A non-pressurized lubrication system as set forth in Claim 7, wherein said fluid slinger (54) comprises a generally radial member secured to said input shaft (21) to rotate wherewith and having a plurality of radially extending arms (57) secured to a central hub (55) and terminating in thicker slinger portions (58) at the ends of said arms.

FIG.1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 819 519   (SIEMENS) | 1,2,6-8, 10 | F 16 N 7/26 F 16 H 57/04 |
| Y | (* the whole document *) | 12 | |
| A | | 9,11 | |
| | – – – | | |
| Y | US-A-2 943 517   (MARKLEY ET AL.) | 12 | |
| A | (* column 2, line 70 - column 3, line 23; figures) | 1,7 | |
| | – – – | | |
| X | EP-A-0 166 658   (BENDIX FRANCE) | 1,3,5-7 | |
| A | (* page 1, line 30 - page 3, line 1; figures *) | 4 | |
| | – – – | | |
| X | DE-C-448 866   (MORTENSEN) | 1,4,7 | |
| A | (* the whole document *) | 10 | |
| | – – – | | |
| X | US-A-3 036 659   (CROWSON) | 1-3,6-8 | |
| A | (* the whole document *) | 11 | |
| | – – – | | |
| X | US-A-4 721 184   (SOWARDS) | 1,3,7 | |
| | * abstract; figures * * | | |
| | – – – | | |
| A | DE-B-1 047 820   (LAMMERZ) | | TECHNICAL FIELDS SEARCHED (Int. Cl.5) |
| | – – – – – | | F 16 N F 16 H |

The present search report has been drawn up for all claims

| Place of search | Date of completion of search | Examiner |
|---|---|---|
| The Hague | 03 January 92 | KOOIJMAN F.G.M. |